# EUROPÄISCHE PATENTANMELDUNG

(11) **EP 1 374 675 A1**
(43) Veröffentlichungstag der Anmeldung: **02.01.2004**
(21) Anmeldenummer: 03012352.5
(22) Anmeldetag: 30.05.2003
(51) Int. Cl.: A01M 1/02, A01M 1/14

(54) **Insektenfalle mit Hologramm**

(30) Priorität: 22.06.2002 DE 10227947
(71) Anmelder: ECS Environment Care Systems GmbH, 56626 Andernach (DE)
(72) Erfinder: Feldhege, Michael, Dr., 56068 Koblenz (DE); Kloczko, Malgorzata, Dr., 53577 Neustadt/Wied (DE); Schnitzler, Iris, Dr., 53127 Bonn (DE); Roreger, Michael, 56567 Neuwied (DE)
(74) Vertreter: Schmidt, Werner

(57) **Zusammenfassung**

Es wird eine Insektenfalle beschrieben, die ein insektenanlockendes Element (1) und ein insektenhaltendes Element (2) umfasst, wobei das insektenanlockende Element (1) ein Hologramm ist, d. h. ein filmförmiges Material, welches das Ergebnis eines holographischen Aufnahmeverfahrens enthält. Als insektenhaltendes Element (2) der Insektenfalle kann ein Hohlkörper oder ein Kleber dienen, vorzugsweise in Form einer Kleberschicht (2). Die Insektenfalle kann auch Insektizide und Lockstoffe enthalten. Die Verwendung eines Hologramms ist besonders geeignet zum Anlocken von fliegenden Insektenarten wie der Hausfliege, der Speisemotte, der Kleidermotte, Stechmücken und der Gemeinen Wespe.

## Beschreibung

Die Erfindung betrifft eine Insektenfalle, die ein Hologramm enthält.

Zum Fangen von Insekten konstruierte Fallen sind seit langem bekannt. Es existieren elektrisch betriebene Fallen und solche, die ohne externe Stromerzeugung auskommen. Als wesentliches Prinzip der meisten Fallen wird eine Lockwirkung eingesetzt, die auf der Reizung physiologischer Rezeptoren beruht. Hierzu werden z. B. Lockstoffe, Lichteffekte, Signalfarben oder optische Muster eingesetzt. Die so angelockten Insekten können dann in einem Hohlkörper eingefangen, mittels Kleber dauerhaft festgehalten oder durch den Kontakt mit Gift, elektrischen Strom oder Hitze getötet werden. Entsprechende Insektenfallen sind z. B. in US 5,713,153 (Cook et al.), US 4,686,789 (Williams), WO 97/01271 (Silvandersson), EP 475 665 (Agrisense), EP 446 464 (Bayer), WO 01/78502 (ECS Environment Care Systems) bzw. WO 98/42186 (Silvandersson) offenbart.

Das Anlocken der Insekten beruht auf Lichteffekten, Farbeffekten oder auf der Freisetzung von flüchtigen Sexuallockstoffen. Die bekannten Lichteffekte benötigen eine Stromquelle. Die Verwendung von Pigmenten, die zu einer UV-Phosphoreszenz befähigt sind, beschränkt den Einsatz der Insektenfalle auf den Zeitraum der Abenddämmerung. Die Verwendung von flüchtigen Sexuallockstoffen hat den Nachteil, dass nur eine zeitlich begrenzte Wirkung beobachtet wird.

Es ist Aufgabe der Erfindung, eine Insektenfalle zur Verfügung zu stellen, die eine dauerhafte und ohne auf die Strom angewiesene insektenanlockende Wirkung aufweist. Hierbei soll auch der Aspekt einer möglichst einfachen Herstellung im Auge behalten werden.

Gelöst wird die Aufgabe durch eine Insektenfalle, die ein insektenanlockendes Element und ein insektenhaltendes Element umfasst, wobei das insektenanlockende Element ein Hologramm ist.

Unter Hologramm im Sinne der vorliegenden Erfindung ist ein filmförmiges Material zu verstehen, welches das Ergebnis eines holographischen Aufnahmeverfahrens enthält.

Ein Hologramm kann unter Verwendung eines holographischen Aufnahmeverfahrens hergestellt werden. Ein holographisches Aufnahmeverfahren (Holographie) ist eine Methode, Objekte dreidimensional abzubilden. Die Informationen über das Objekt werden dauerhaft auf speziellem filmförmigen Material gespeichert. Zur Aufnahme eines Hologramms ist vorzugsweise eine kohärente und ausreichend starke Lichtquelle erforderlich, wie es bei einem Laser der Fall ist.

Ursprünglich wurde zur Aufnahme von Hologrammen die "in-Line-Methode" von Gabor verwendet. Sie wurde nach der Erfindung des Lasers verbessert, indem mit zwei Strahlen, die erst unmittelbar vor der Photoplatte zusammen interferieren, gearbeitet wurde. Man nennt diese Methode das "Zweistrahl-Verfahren".

Das Grundprinzip der holographischen Aufnahmeverfahren besteht darin, dass bei der Belichtung des Objekts während der Aufnahme das Laserlicht je nach Form des Gegenstandes reflektiert. Da bei der Überlagerung zweier Wellen Verstärkungen und Auslöschungen des Lichts auftreten, bilden die Objektwellen, die vom Gegenstand reflektiert werden zusammen mit der Referenzwelle des zweiten Strahls auf dem Film ein individuelles Muster aus sich überlagernden Kreisen. Das Bild des Objekts wird also nicht wie bei einer Fotographie direkt auf den Film abgebildet. Vielmehr werden die vom Objekt erzeugten Wellenfronten, also die Lagen der vom Objekt gestreuten Lichtwellen aufgezeichnet. Daher enthält das Hologramm wesentlich mehr Informationen als ein normales Foto, bei dem nur die Amplitudenverteilung, also die Intensität des Lichts, nicht aber die Phasenverteilung gespeichert wird.

Zur Betrachtung des Hologramms benötigt man einen Laser mit derselben Wellenlänge wie der bei der Aufnahme verwendete, außer natürlich für Weißlicht-Reflexionshologrammen, die man, wie der Name schon sagt, bei normal weißem Licht betrachten kann. Durch das Muster der Wellenfronten auf dem Hologramm wird nun mit Hilfe des (Laser-)Lichts die ursprüngliche Objektwelle wiederhergestellt.

Für die vorliegende Erfindung können verschiedene Typen von Hologrammen in Frage kommen, insbesondere Transmissionshologramme, Denisjukhologramme, Regenbogenhologramme, Bildebenenhologramme, Multiplexhologramme, Prägehologramme oder computergenerierte Hologramme.

### Transmissionshologramm

Wie der Name schon sagt (lat.: transmittere = durchschicken) muss bei der Wiedergabe solcher Hologramme das Licht durch das Hologramm kommen, das bedeutet: Betrachter und Lichtquelle befinden sich auf verschiedenen Seiten des Films. Da bei der Aufnahme Objekt- und Referenzwelle von der gleichen Seite auf den Film fallen müssen, wird in diesem Fall die übliche Zweistrahlanordnung verwendet. Der Vorteil dieser Hologramme liegt darin, dass sie über eine große räumliche Tiefe verfügen Die Tiefe ist in diesem Fall nur durch die Kohärenzlänge des Aufnahmelasers begrenzt. Für Ausstellungen und Präsentationen ist diese Art von Hologrammen nicht so gut geeignet, da zur Rekonstruktion Laserlicht oder wenigstens monochromatisches Licht (z. B. Quecksilberdampflampe) benötigt wird.

### Denisjukhologramm

Diese Hologrammart ist nach ihrem Erfinder benannt. Man spricht auch von Weißlicht-Reflexionshologrammen. Wie der Name schon sagt, können diese Hologramme mit normalem, weißem Licht (z.B. einer Halogenlampe oder direktem Sonnenlicht) rekonstruiert werden. Dies hat den Vorteil, dass keine komplizierte Beleuchtung mit Laserlicht notwendig ist. Trotzdem wird aber zur Aufnahme Laserlicht benötigt. Bei der Aufnahme von Denisjukhologrammen treffen Referenzstrahl und Objektstrahl von verschiedenen Seiten auf den Film. Es wird eine Einstrahlanordnung verwendet. Bei der Rekonstruktion muss das Licht von der gleichen Seite auf das Hologramm fallen, wie der Referenzstrahl bei der Aufnahme. Der Betrachter befindet sich in diesem Fall auf der selben Seite des Hologramms, wie die Lichtquelle. Da das modulierte Licht von der Lichtquelle zum Betrachter reflektiert wird, spricht man von Reflexionshologrammen.

Der Unterschied zum Transmissionshologramm besteht darin, dass Objekt- und Referenzstrahl von entgegengesetzten Seiten auf den Film fallen. Dadurch kommt es zu sog. "stehenden Wellen", wodurch keine Interferenzringe, sondern ein Optisches Gitter ausgebildet wird. Die beiden Wellen verstärken sich durch ihre entgegengesetzte Richtung nur an ganz bestimmten Punkten in der Filmschicht. Diese Punkte liegen nicht nur auf einer Ebene, wie die Interferenzringe, sondern gehen auch noch in die Tiefe des Films, weshalb dieser eine bestimmte Dicke haben muss. Es gibt also mehrere parallele Schichten mit geschwärzten Punkten in der photographischen Emulsion, die etwa eine halbe Lichtwellenlänge voneinander entfernt sind. Im Abstand von einer Schicht zur nächsten ist nun die Information über die Wellenlänge der Objektwelle und im Aussehen des gesamten Gitters die objekttypische Wellenfront gespeichert. Bei der Wiedergabe mit weißem Licht wird jetzt nur eine Wellenlänge verstärkt, nämlich die, die durch den Schichtabstand bestimmt ist. Alle anderen Wellen schwächen sich gegenseitig ab. Durch Beugung an den Gitterpunkten wird wieder die ursprüngliche Objektwelle erzeugt. Das Hologramm sucht sich quasi aus dem weißen Licht, in dem alle Wellenlängen vorhanden sind, die Wellenlänge heraus, mit der die ursprüngliche Objektwellenfront wieder rekonstruiert werden kann.

### Regenbogenhologramm

Diese besondere Art von Hologrammen ist eine der bekanntesten und gängigsten. Sie zeichnet sich besonders durch Lichtstärke und räumliche Tiefe aus. Die Rekonstruktion erfolgt mit weißem Licht, es sind also Weißlichthologramme. Der entscheidende Nachteil aber ist, dafür die vertikale Parallaxe vollständig fehlt. Das bedeutet, man kann links und rechts am Objekt herumschauen, verändert man aber den vertikalen Blickwinkel, so kann man das Objekt nicht von oben und unten betrachten. Der Grund dafür liegt in der Aufnahmemethode der Regenbogenhologramme. Sie werden nach einem zweistufigem Verfahren hergestellt. Zuerst wird ein Transmissionshologramm gefertigt. Von diesem sogenannten Masterhologramm können dann mehrere Regenbogenhologramme hergestellt werden. Man nimmt im zweiten Schritt ein Hologramm eines Objektes auf, welches gar nicht mehr vorhanden ist. Dies geschieht auf folgende Weise:
Ein Spalt des Masterhologramms wird mit Laserlicht beleuchtet, dadurch wird das Objekt im Raum rekonstruiert. In dieses virtuelle Bild wird die Filmplatte gestellt und mit einem Referenzstrahl beleuchtet. Da nur ein Spalt des Masterhologramms verwendet wird, fehlt die vertikale Parallaxe. Bei der Rekonstruktion findet in der Vertikalen nur eine Spektralzerlegung des Lichts statt, das bedeutet, das Objekt erscheint von oben nach unten in verschiedenen Spektralfarben (Regenbogenfarben), darauf ist auch der Name zurückzuführen. Regenbogenhologramme sind Transmissionshologramme. Um eine einfachere Rekonstruktion zu ermöglichen, wird hinter der Schicht aus dem filmförmigen Material eine Spiegelschicht angebracht. So muss das Hologramm nicht von hinten beleuchtet werden.

### Bildebenenhologramm

Eine weitere Art von Hologrammen sind Bildebenenhologramme. Sie können durch Weißlicht rekonstruiert werden und gehören zu den Reflexionshologrammen. Die Besonderheit an diesen ist, dass das Objekt in der Filmebene zu schweben scheint. Das bedeutet, die eine Hälfte des Objekts ist vor dem Film zu sehen, die andere hinter dem Film. Bei der Aufnahme solcher Hologramme wird ein Trick verwendet, man fertigt zuerst ein Masterhologramm als ganz normales Transmissionshologramm. Die Aufnahme des Bildebenenhologramms geschieht dann ähnlich wie bei Regenbogenhologrammen, nur wird in diesem Fall der Film nicht in das virtuelle Bild sondern in das reelle Bild gestellt. Zu erwähnen ist noch, dass in diesem Fall kein Spalt zur Rekonstruktion benötigt wird und im fertigen Hologramm sowohl eine vertikale, als auch eine horizontale Parallaxe vorhanden ist.

### Multiplexhologramm

Ein besonders interessanter Typ von Hologrammen sind Multiplexhologramme. Diese Hologramme besitzen die besondere Eigenschaft, nicht nur ein dreidimensionales Bild darzustellen, sie verfügen sogar über die Möglichkeit Bewegungen festzuhalten und somit eigentlich die vierte Dimension, die Zeit zu speichern. Dazu wird zuerst ein normaler Film zum Beispiel von einer Person gedreht, die Kamera bewegt sich dabei um die Person herum. Danach wird von jedem Bild dieses Filmes, der den Bewegungsablauf ja nur zweidimensional festhält ein schmales (ca. 2 mm) Streifenhologramm auf die Hologrammplatte aufgenommen. Der Rest des Films wird dazu abgedeckt. So entsteht ein Hologramm, das aus mehr als 1000 verschiedenen Streifenhologrammen besteht. Die Information dieser einzelnen Hologramme ist ebenfalls zweidimensional. Die dritte Dimension kommt in diesem Fall nur durch das stereoskopische Sehen zustande. So kann z. B. das linke Auge ein Bild sehen, das weiter links im Hologramm gespeichert ist, als das Bild, welches vom rechten Auge gesehen wird. Da sich die Kamera bei der Aufnahme um das Objekt, herum bewegt hat, hat jedes Bild einen anderen Blickwinkel zum Objekt. Das Gehirn setzt so aus den beiden Bildern ein dreidimensionales Gebilde zusammen. Bewegt sich nun der Betrachter um das Hologramm herum, so sieht er ein Streifenhologramm nach dem anderen. Da sich die Bilder zeitlich voneinander unterscheiden, kann man die Bewegung deutlich beobachten.

### Prägehologramm

Diese Hologramme sind wegen dem hohen und komplizierten Herstellungsaufwand sehr fälschungssicher. Sie werden z. B. auf Kreditkarten verwendet. Verändert man den Blickwinkel auf das Hologramm, so kann man ggf. eine Bewegung beobachten. Diese Art von Hologrammen, zeichnet sich besonders dadurch aus, dass die Hologramme in beliebiger Stückzahl unter relativ geringem Aufwand vervielfältigt werden können. Man erkennt sie am silbernen Hintergrund. Zuerst muss ein normales Weißlichtreflexionshologramm hergestellt werden.

### Computergeneriertes Hologramm

Es werden auch Prägehologramme hergestellt, deren Interferenzmuster mit Computern berechnet werden. In diesem Fall erübrigt es sich ein Weißlichthologramm herzustellen. Es wird jedoch ein spezieller Film verwendet, bei dem das Interferenzmuster das Beugungsgitter praktisch als Relief hinterlässt. Von diesem Relief wird ein Abdruck gemacht und ein Prägestempel hergestellt. Der Stempel wird benutzt, um beliebig viele Hologramme in eine sehr dünne Folie zu prägen. Die Folie wird zuletzt noch von hinten mit einer silbernen Schicht bedampft.

Unter "filmförmig" ist zu verstehen, dass das Material, welches das Ergebnis des holographischen Aufnahmeverfahrens enthält, im wesentlichen nur in zwei Dimensionen ausgedehnt ist. In der Insektenfalle stellt das "filmförmige Material" somit eine dünne Schicht dar.

Als Material, welches das Ergebnis des holographischen Aufnahmeverfahrens enthält, kommen die dem Fachmann bekannten Polymermaterialen, insbesondere solche für photographische Filme, in Frage. Zu solchen Polymermaterialen zählen z. B. Gelatine, Polyvinylchlorid, Polyacrylnitril, Polyacrylate, Polyester, Polyethylenterephthalat, Polypropylen, Polyethylen, Ethylen-Vinylacetat-Copolymere, Polyvinylpyrrolidon (PVP), Polyvinylalkohol (PVA).

Die Insektenfalle kann auch eine Spiegelschicht enthalten, die als Spiegel für das Hologramm wirkt. Sie ist daher vorzugsweise direkt unter der Schicht angeordnet, die das Hologramm enthält. Die Spiegelschicht bewirkt, dass das einfallende Licht nach dem Passieren des Hologramms durch dieses hindurch reflektiert wird. Als Material für die Spiegelschicht kommt ein Metall in Frage, z. B. Aluminium. Dieses kann als Folie auf das filmförmige Material kaschiert oder auch direkt aufgedampft werden.

Unter dem insektenhaltenden Element der Insektenfalle ist der Teil der Falle zu verstehen, der bewirkt, dass das angelockte Insekt gefangen wird. Im einfachsten Fall ist dies ein Hohlkörper (z. B. ein Kasten, Beutel, netzartiges Gebilde etc.), der mindestens eine Öffnung zum Eintritt der Insekten besitzt, dessen Konstruktion jedoch ein Entweichen des Insekts daraus erschwert bzw. dauerhaft verhindert und somit langfristig zum Tode des Insekts führt.

Es kann sich bei dem insektenhaltenden Element aber auch um einen Kleber handeln, der in einer besonderen Ausführungsform als Schicht vorliegt. Der Kleber kann aus mindestens einem haftklebenden Polymer aufgebaut sein. Er kann auch aus einem nichtklebenden Polymer aufgebaut sein, wobei in diesem Fall Klebrigmacher (tackifier) darin enthalten sein müssen. Solche Tackifier können auch zur Verstärkung der Klebkraft einem aus einem haftklebenden Polymer aufgebauten Kleber zugesetzt werden. Haftklebende Polymere sind dem Fachmann bekannt, hierzu zählen z.B. Polyisobutylene, Polyacrylate oder Silicone.

Klebrigmacher sind dem Fachmann ebenfalls bekannt, hierzu zählen z. B. Harze und Ester der (hydrierten) Abietinsäure.

Die Kleberschicht ist in der Insektenfalle in einer bevorzugten Ausführungsform oberhalb der das Hologramm enthaltenden Schicht angeordnet. Vorzugsweise ist die Kleberschicht von einer Schutzfolie abgedeckt, welche erst unmittelbar vor Anwendung der Insektenfalle entfernt wird, um ein unerwünschtes Verkleben der Insektenfalle zu vermeiden.

Die Insektenfalle kann auch Insektizide und andere, dem Fachmann bekannte Stoffe und Vorrichtungen zum Töten von Insekten enthalten.

Die Insektenfalle kann neben dem Hologramm auch weitere, dem Fachmann bekannte Elemente zum Anlocken von Insekten enthalten, wie z. B. Lockstoffe, Frassstimulantien, Farbpigmente, phosphoreszierende Pigmente, Lichteffekte, geometrische Muster etc.

In besonderen Ausführungsformen der Insektenfalle sind diese Stoffe (Insektizide, Lockstoffe, Frassstimulantien, Farbpigmente, phosphoreszierende Pigmente), sofern sie in der Insektenfalle enthalten sind, in einer separaten Schicht und / oder in der Kleberschicht enthalten.

Die Insekten sind eine Klasse des Stammes Arthropoda (Gliederfüßer). Dieser Stamm unterscheidet sich von allen anderen Tieren durch den Besitz eines gegliederten, panzerartigen Haut- oder Außenskelettes. Hierzu zählen: Springschwänze, Beintaster, Doppelschwänze, Felsenspringer, Silberfischchen, Eintagsfliegen, Libellen, Steinfliegen, Fußspinner, Laubheuschrecke, Feldheuschrecken, Ohrwürmer, Notoptera, Gottesanbeterinnen, Schaben, Stabheuschrecken, Termiten, Bodenläuse, Staubläuse, Tierläuse, Fransenflügler, Wanzen, Zikaden, Pflanzenläuse, Schlammfliegen, Kamelhalsfliegen, Netzflügler, Skorpionsfliegen, Köcherfliegen, Schmetterlinge, Zweiflügler, Flöhe, Hautflügler, Käfer und Fächerflügler. Im speziellen handelt es sich um die in Innenräumen auftretenden fliegenden Insektenarten wie z.B. *Musca domestica* (Hausfliege), *Plodia interpunctella* (Speisemotte), *Tineola bisselliella* (Kleidermotte), *Anopheles, Aedes* oder *Culex* Arten (Stechmücken) oder *Vespula vulgaris* (Gemeine Wespe).

Die Insektenfalle kann durch einfache Verfahren hergestellt werden, z. B. durch Aufkleben eines kommerziell erhältlichen Hologramms auf eine Seite im Innern des betreffenden Hohlkörpers. Bei Verwendung eines Klebers als insektenhaltendes Element kann dieser (vorzugsweise direkt) auf das Hologramm aufgetragen werden, z. B. durch bekannte Verfahren wie Extrusion, Laminieren, Kaschieren, etc.

Die Erfindung wird durch die folgenden Figuren illustriert, ohne daß diese darauf beschränkt wäre.

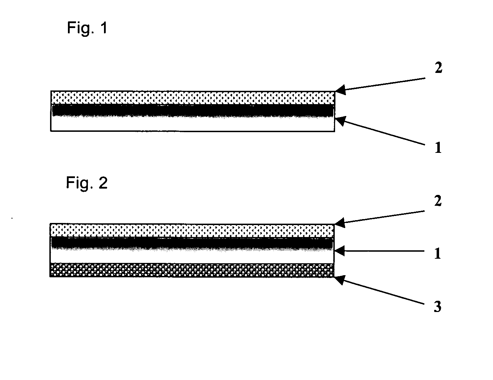

Fig. 1 zeigt den Querschnitt einer Ausführungsform der erfindungsgemäßen Insektenfalle, welche ein Hologramm als insektenanlockendes Element und eine Kleberschicht als insektenhaltendes Element besitzt.

Fig. 2 zeigt den Querschnitt einer Ausführungsform wie in Fig. 1, die jedoch zusätzlich eine Spiegelschicht besitzt.

In den Figuren haben die Bezugszeichen folgende Bedeutung:
- 1 =: Hologramm (filmförmiges Material, welches das Ergebnis eines holographischen Aufnahmeverfahrens enthält)
- 2 =: Kleberschicht
- 3 =: Spiegelschicht

## Patentansprüche

1. Insektenfalle, umfassend ein insektenanlockendes Element und ein insektenhaltendes Element, **dadurch gekennzeichnet, dass** das insektenanlockende Element ein Hologramm ist.

2. Insektenfalle nach Anspruch 1, **dadurch gekennzeichnet, dass** es sich bei dem Hologramm um ein Transmissionshologramm, ein Denisjukhologramm (Weißlicht-Reflektionshologramm), ein Regenbogenhologramm, ein Bildebenenhologramm, ein Multiplexhologramm, ein Prägehologramm oder ein computergeneriertes Hologramm handelt.

3. Insektenfalle nach Anspruch 1 oder 2, **dadurch gekennzeichnet, dass** das insektenhaltende Element ein Hohlkörper und / oder ein Kleber ist.

4. Insektenfalle nach einem oder mehreren der Ansprüche 1 bis 3, **dadurch gekennzeichnet, dass** unter dem Hologramm eine Spiegelschicht angeordnet ist.

5. Insektenfalle nach einem oder mehreren der Ansprüche 1 bis 4, **dadurch gekennzeichnet, dass** sie zusätzlich mindestens ein Insektizid, einen Lockstoff, ein Frassstimulanz, ein Farbpigment, ein phosphoreszierendes Pigmente, oder ein geometrisches Muster enthält.

6. Insektenfalle nach einem oder mehreren der Ansprüche 1 bis 5, **dadurch gekennzeichnet, dass** ein Kleber in Form einer Schicht enthalten ist.

7. Verwendung eines Hologramms zum Anlocken von Insekten.

8. Verfahren zum Anlocken und Fangen von Insekten, **dadurch gekennzeichnet, dass** ein Insekt mittels eines Hologramms als insektenanlockenden Elements angelockt wird und mittels eines insektenhaltenden Elements dauerhaft festgehalten wird.
